# EUROPÄISCHE PATENTSCHRIFT

(11) **EP 4 314 508 B1**
(45) Veröffentlichungstag und Bekanntmachung des Hinweises auf die Patenterteilung: **03.12.2025**
(21) Anmeldenummer: 21844287.9
(22) Anmeldetag: 22.12.2021
(51) Int. Cl.: F01N 13/00, F01N 3/027, F01N 3/08, F01N 3/20

(54) **VORRICHTUNG ZUR ABGASNACHBEHANDLUNG UND VERFAHREN ZUM HERSTELLEN DIESER**
DEVICE FOR EXHAUST-GAS TREATMENT AND METHOD FOR THE PRODUCTION THEREOF
DISPOSITIF DE TRAITEMENT DES GAZ D'ÉCHAPPEMENT ET SON PROCÉDÉ DE PRODUCTION

(30) Priorität: 24.03.2021 DE 102021202901
(43) Veröffentlichungstag der Anmeldung: 07.02.2024
(73) Patentinhaber: Emitec Technologies GmbH, 53797 Lohmar (DE)
(72) Erfinder: HIRTH, Peter, 80687 München (DE); HÄRIG, Thomas, 80687 München (DE)
(74) Vertreter: karo IP
(86) Internationale Anmeldenummer: PCT/EP2021/087184
(87) Internationale Veröffentlichungsnummer: WO 2022/199877

(56) Entgegenhaltungen:
- EP-A1- 1 580 410
- EP-A1- 3 715 596
- CN-B- 102 628 389
- CN-B- 106 089 372
- CN-B- 110 206 622
- DE-A1- 102014 115 063
- DE-A1- 19 943 846
- DE-A1- 4 434 673
- US-A1- 2018 119 591

## Beschreibung

### Technisches Gebiet

Die Erfindung betrifft eine Vorrichtung zur Aufheizung eines in einer Abgasleitung strömenden Abgases, mit einer Heizscheibe, wobei die Heizscheibe zumindest einen elektrischen Leiter aufweist, welcher entlang eines Leiterpfades angeordnet ist, wobei zwischen einzelnen Abschnitten des elektrischen Leiters Luftspalte ausgebildet sind, wobei die Heizscheibe mittels Stützmitteln elektrisch isoliert mit einem scheibenartigen Stützelement verbunden ist. Darüber hinaus betrifft die Vorrichtung ein Verfahren zur Herstellung einer solchen Vorrichtung.

### Stand der Technik

Zur Verbesserung der Abgasreinigung einer Verbrennungskraftmaschine werden im Abgastrakt unterschiedliche Katalysatoren eingesetzt. Um eine möglichst frühe und vollständige Abgasnachbehandlung zu ermöglichen ist es notwendig, die sogenannten Light-Off Temperatur der jeweiligen Katalysatoren möglichst schnell zu erreichen. Die Light-Off Temperatur ist dabei spezifisch für jeden Katalysator und ist unter anderem durch den jeweiligen Aufbau, das verwendete Material oder die gewählte katalytisch aktive Beschichtung bestimmt. Die Light-Off Temperatur beschreibt die Grenztemperatur, ab der der Katalysator seine vollständige Funktion hat und die entsprechenden Bestandteile des Abgases ausreichend umsetzt. Die Aufheizung des Abgases über elektrische Heizelemente ist insbesondere im Niedriglastbetrieb oder nach dem Kaltstart notwendig.

Vorrichtung zur Aufheizung des Abgasstroms beziehungsweise der im Abgastrakt angeordneten Katalysatoren sind im Stand der Technik in vielfältiger Weise bekannt. Insbesondere sind Wabenkörper bekannt, welcher als Heizscheibe mit einer begrenzten axialen Erstreckung ausgebildet sind und mit einer Spannungsquelle verbunden sind, so dass sie unter Ausnutzung des ohnmschen Widerstandes erhitzt werden können. Das um die Heizscheibe strömende Abgas wird somit erwärmt, wodurch ebenfalls die von dem Abgas nachfolgend durchströmten Katalysatoren erwärmt werden. Die Light-Off Temperatur wird somit im Vergleich zu einem nicht elektrisch beheizten Abgassystem deutlich früher erreicht.

Es ist bekannt, dass eine Heizscheibe gegen einen nachgelagerten Wabenkörper abgestützt wird. So offenbart beispielsweise die DE 102014115063A1 eine Tragstruktur mit einer elektrischen Isolierung, wobei die Tragstruktur mindestens einen Steg umfasst, der eine Querschnittsfläche eines vor bzw. nachgelagerten Wabenkörpers überspannt oder einschließt. Weiter ist die Tragstruktur mit einer Mehrzahl von Stiften ausgeführt, die sich beidseits der Querschnittsfläche der Tragstruktur erstrecken. Die Tragstruktur ist dazu ausgebildet, zwei Wabenkörper miteinander zu verbinden und/oder gegeneinander abzustützen, so weist diese insbesondere eine im Wesentlichen (starre bzw.)formsteife Konstruktion auf. Zudem kann die Tragstruk-turzweiWabenkörperelektrischvoneinanderisolieren.Insbesonderehatdie Tragstruktur im Wesentlichen nur eine entsprechende Haltefunktion und Isolierungsfunktion.

EP 3 715 596 A1 offenbart eine Vorrichtung zur katalytischen Behandlung von Abgas aus einem Verbrennungsmotor, die ein für Abgas durchströmbares Heizgerät in einem Gehäuse umfasst, wobei dieses einen elektrischen Widerstandsdraht an einem elektrisch isolierenden Rahmen aufweist.

### Darstellung der Erfindung, Aufgabe, Lösung, Vorteile

Esistdie Aufgabe der vorliegenden Erfindung eine Vorrichtung zur Abgasnachbehandlung, insbesondere zur Aufheizung eines in einer Abgasleitung strömenden Abgases, zu schaffen, welche vollständig und in hoher Qualität mit einem Washcoat beaufschlagt werden kann und gleichzeitig eine ausreichend hohe Stabilität zur Weiterverarbeitung aufweist. Weiterhin ist es die Aufgabe der Erfindung ein Verfahren zur Herstellung der Vorrichtung zu schaffen.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Aufheizung eines in einer Abgasleitung strömenden Abgases, mit einer Heizscheibe, wobei die Heizscheibe zumindest einen elektrischen Leiter aufweist, welcher entlang eines Leiterpfades angeordnet ist, wobei zwischen einzelnen Abschnitten des elektrischen Leiters Luftspalte ausgebildet sind, wobei die Heizscheibe mittels Stützmitteln elektrisch isoliert mit einem scheibenartigen Stützelement verbunden ist, wobei das scheibenartige Stützelement zumindest einen Steg aufweist, welcher eine starre Aufnahme für die Stützmittel bildet, wobei das scheibenartige Stützelement zumindest eine Aussparung aufweist, welche mit zumindest einem der Luftspalte entlang einer Hauptdurchströmungsrichtung der Vorrichtung in einer Flucht liegt und von dem Abgas durchströmbar ist.

Das scheibenartige Stützelement ist auf der der Heizscheibe abgewandten Seite mit einer scheibenartigen Luftleitplatte verbunden, wobei die Luftleitplatte mehrere Bohrungen aufweist, welche mit der Aussparung des scheibenartigen Stützelementes und/oder zumindest einem der Luftspalte entlang der Hauptdurchströmungsrichtung der Vorrichtung in einer Flucht liegen und von dem Abgas durchströmbar sind.

Die Heizscheibe weist zumindest einen elektrischen Leiter auf. Dieser wird mit einer Spannungsquelle verbunden und somit kann unter Ausnutzung des ohmschen Widerstandes Wärme erzeugt werden. Der elektrische Leiter kann bevorzugt durch einen metallischen Wabenkörper gebildet sein, der beispielsweise aus einer Mehrzahl von Metallfolien gebildet ist, die zu einem Lagenstapel aufeinandergestapelt und aufgewickelt sind. Der elektrische Leiter kann aber auch durch einen Draht gebildet sein, oder einen anderen elektrisch leitfähigen Körper.

Metallische Wabenkörper in Heizscheiben sind im Stand der Technik in vielfältiger Weise bekannt. Sie weisen eine Mehrzahl von entlang einer Hauptdurchströmungsrichtung von einer ersten Stirnseite, die eine Gaseinlasseite darstellt, zu einer zweiten Stirnseite, die eine Gasauslassseite darstellt, durchströmbaren Kanälen auf.

Ein als Draht ausgebildeter elektrischer Leiter wird analog von einer durch eine Stirnseite gebildeten Gaseinlassseite hin zu einer ebenfalls durch eine Stirnseite gebildeten Gasauslassseite von einem Abgas umströmt.

Der elektrische Leiter, gleich welcher Bauart, ist innerhalb der Heizscheibe entlang eines sogenannten Leiterpfades angeordnet. Im Falle eines metallischen Wabenkörpers ergibt sich der Leiterpfad beispielsweise durch das Aufwickeln des Lagenstapels. Je nach Wicklungstechnik kann so beispielsweise ein S-förmig aufgerollten Wabenkörper entstehen. Im Falle eines Drahtes als elektrischem Leiter kann eine beliebige Anordnung gewählt werden. Der Leiter kann in einer Ebene oder in mehreren parallel zueinander angeordneten Ebenen verlaufen.

Um Kurzschlüsse zwischen den einzelnen Abschnitten des Leiters zu vermeiden, wird zwischen den Abschnitten des Leiters ein Luftspalt vorgesehen. Dies ist notwendig, da eine optimale Aufheizung nur dann erfolgen kann, wenn der gesamte Leiter möglichst gleichmäßig vom angelegten Strom durchflossen wird und so eine möglichst homogene Aufheizung des Leiters erreicht wird. Durch Kurzschlüsse zwischen einzelnen Abschnitten des Leiters kann es zu einer unerwünschten Stromleitung kommen, wodurch es Ungleichmäßigkeiten in der Wärmeerzeugung gibt und darüber hinaus auch die Funktionsfähigkeit der gesamten Heizscheibe beeinträchtigt werden kann. Durch die Luftspalte sind die einzelnen Abschnitte des Leiters im Wesentlichen in radialer Richtung zueinander beabstandet.

Um den elektrischen Leiter gegenüber den restlichen Komponenten der Vorrichtung elektrisch zu isolieren werden sogenannten Stützmittel verwendet, welche auch zusätzlich eine fixierende Wirkung haben können. Gebräuchlich und bekannt sind etwa Stützstifte mit einem elektrisch nicht leitenden Kern, beispielsweise aus einer Oxidkeramik. Diese können im Falle eines Wabenkörpers in einzelne der durchströmbaren Kanäle des Wabenkörpers eingesteckt werden und so mit diesem verbunden werden. Hierzu können die Stützstifte beispielsweise metallische Beschichtungen aufweisen oder in Metallhülsen eingesteckt sein, welche dann wiederrum in die Kanäle des Wabenkörpers eingesteckt und mit diesem verbunden sein können.

Über die Stützmittel wird eine räumliche Beabstandung zu anderen elektrisch leitfähigen Strukturen erzeugt. Darüber hinaus werden Strom leitungspfade entlang dieser Stützmittel durch einen geeigneten Aufbau dieser Stützmittel verhindert.

Ein Stützelement kann in einer einfachen Ausführung ein Blechelement sein. Dieses Stützelement dient zur Aufnahme der Stützmittel, welche mit dem elektrischen Leiter der Heizscheibe verbunden ist. Das Stützelement bildet somit einen Rahmen, welcher zur Stabilisierung des elektrischen Leiters dient. Dies ist insbesondere vorteilhaft, da elektrische Leiter, sowohl metallischer Wabenkörper als auch Drähte, grundsätzlich keine ausreichende Stabilität aufweisen, um die zur Montage notwendigen Schritte unbeschadet zu überstehen. Insbesondere die Beschichtung des elektrischen Leiters mit einer geeigneten Beschichtung, einem sogenannten Washcoat, ist ein mechanisch belastendes Verfahren, welches bei einem nicht abgestützten elektrischen Leiter unweigerlich zu einer ungewollten Deformation desselben führt.

Das Stützelement ist benachbart und parallel zu einer der Stirnseiten, bevorzugt der Gaseinlassseite, der Heizscheibe angeordnet und mittels der Stützmittelzur Heizscheibe beabstandet.

Das Stützelement weist bevorzugt zumindest eine Aussparung auf. Besonders bevorzugt weist das Stützelement mehrere Aussparungen auf, die ein möglichst ungehindertes Durchströmen des Stützelementes erlauben. Im Verhältnis zu der von dem Stützelement aufgenommenen Heizscheibe ist das Stützelement bevorzugt wesentlich dünner ausgebildet.

Mit der Hauptdurchströmungsrichtung ist die Strömungsrichtung des Abgases gemeint, entlang welcher die Heizscheibe durchströmt wird. Dies ist regelmäßig von einer Stirnseite zur jeweils anderen Stirnseite. Die Strömungsrichtung verläuft somit bevorzugt entlang einer axialen Richtung eines Gehäuses, in welcher die Heizscheibe angeordnet ist.

Die Luftleitplatte ist eine im Wesentlichen über den gesamten durchströmbaren Querschnitt der Vorrichtung geschlossene Platte, welche die Durchströmung der Vorrichtung mit Abgas deutlich begrenzt. Die Luftleitplatte weist zum Zwecke der Erzeugung einer gerichteten Abgasströmung Bohrungen auf, welche ein Durchströmen der Luftleitplatte ermöglichen. Die Bohrungen haben dabei bevorzugt einen Durchmesser von wenigen Millimetern und wirken wie Düsen.

Die Bohrungen sind dabei derart angeordnet, dass sie mit der Aussparung beziehungsweise den Aussparungen des Stützelementes und dem Luftspalt beziehungsweise den Luftspalten der Heizscheibe entlang der Hauptdurchströmungsrichtung in einer Flucht liegen und somit eine geradlinige Durchströmung der Vorrichtung durch die Bohrungen der Luftleitplatte, dem Stützelement und der Heizscheibe erfolgen kann.

Die Bohrungen leiten somit das Abgas von der der Heizscheibe abgewandten Seite der Luftleitplatte auf die der Heizscheibe zugewandten Seite der Luftleitplatte. Ab dort strömt das Abgas praktisch frei und insbesondere nicht durch Leitstrukturen in radialer Richtung begrenzt. Aufgrund der vergleichsweise geringen Durchmesser der Bohrungen ist diese Abgasströmung jedoch deutlich beschleunigt und stark gerichtet, so dass die Ausbreitung der Abgasströmung bevorzugt und zu einem wesentlich größeren Anteil entlang einer axialen Richtung beziehungsweise der Hauptdurchströmungsrichtung erfolgt als in einer dazu quer verlaufenden radialen Richtung.

Die erfindungsgemäße Vorrichtung ist insbesondere zu einem Einsatz in einer Heizvorrichtung vorgesehen, welche das Aufwärmen des Abgases zum Ziel hat. Hierzu wird einerseits das Abgas durch das Überströmen der Oberfläche des elektrischen Leiters erwärmt, andererseits wird dem Abgasstrom in der Heizvorrichtung Kraftstoff zugesetzt, welcher durch den Kontakt mit dem elektrisch beheizbaren Leiter in kurzkettigere Verbindungen aufgespalten beziehungsweise verdampft wird, wodurch eine zusätzliche Heizwirkung erzeugt werden kann.

Die Heizvorrichtung wird von einem Gaseintritt durch die Bohrungen der Luftleitplatte entlang derAussparungen des Stützelementes, entlang der Luftspalte der Heizscheibe hin zu einer Prallplatte durchströmt. Dort an der Prallplatte kann die Abgasströmung mit Kraftstoff versetzt werden. Das Abgasgemisch strömt sodann parallel zur Hauptdurchströmungsrichtung jedoch in umgekehrter Richtung durch die Heizscheibe, nun bevorzugt durch die von dem Wabenkörper ausgebildeten Kanäle, und erneut durch die Aussparungen des Stützelementes. Schließlich strömt das Abgasgemisch durch einen Gasauslass aus der Heizvorrichtung aus.

Auch ist es vorteilhaft, wenn das Stützelement topfförmig gestaltet ist, wobei sich von dem Stützelement ein in Umfangsrichtung umlaufender Rand in Richtung der Heizscheibe erstreckt. Das Stützelement kann in dem Rand beispielsweise eine oder mehrere elektrische Durchführungen aufweisen, über welche der elektrische Leiter elektrisch kontaktiert werden kann. Dies ist insbesondere wichtig, da die erfindungsgemäße Vorrichtung in einem als Strömungskanal wirkenden Gehäuse angeordnet ist. Ein solches Gehäuse kann beispielsweise durch einen Rohrkörper einer Abgasleitung gebildet sein.

Ein bevorzugtes Ausführungsbeispiel ist dadurch gekennzeichnet, dass der zumindest eine Steg des Stützelementes eine Mehrzahl von Ausnehmungen aufweist, entlang welcher er mit Abgas durchströmbar ist. Um die Durchströmbarkeit des Stützelementes weiter zu erhöhen und die Beeinträchtigung der Abgasströmung möglichst gering zu halten, kann auch der Steg oder die im Stützelement ausgebildeten Stege einzelne oder mehrere Ausnehmungen aufweisen. Das Stützelement soll insgesamt eine möglichst hohe Porosität aufweisen, um gut durchströmbar zu sein. Gleichzeitig muss das Stützelement eine ausreichende Steifigkeit aufweisen, um einen stabilen Rahmen für den elektrischen Leiter zu bilden. Darüber hinaus muss das Stützelement eine ausreichend große Oberfläche aufweisen, um die Stützmittel des elektrischen Leiters sicher aufzunehmen.

Auch ist es zu bevorzugen, wenn die dem Stützelement zugewandte Stirnseite der Heizscheibe von dem Stützelement durch die Stützmittel auf einem Abstand größer 0 beabstandet ist.

Darüber hinaus ist der erfindungsgemäße Gegenstand dadurch gekennzeichnet, dass der die Heizscheibe bildende elektrische Leiter nicht formstabil ist. Die nicht vorhandene Formstabilität ist durch den grundsätzlichen Aufbau der Heizscheibe begründet. Ein aus Metallfolien durch Aufeinanderstapeln und Aufwickeln erzeugter Wabenkörper weist für sich selbst betrachtet keine hohe Stabilität auf. Insbesondere Krafteiwirkungen auf den Wabenkörper führen zu einer nicht gewollten Deformation. Dies gilt analog für aufgewickelte oder anderweitig angeordnete Drähte.

Da insbesondere die Beaufschlagung des elektrischen Leiters mit einem Washcoat ein mechanisch belastendes Verfahren ist und weiterhin zur optimalen Funktion der Vorrichtung eine sehr exakte Ausrichtung der Luftspalte und der Kanäle des Wabenkörpers gewährleistet sein muss, ist es besonders wichtig, dass der elektrische Leiter mittels eine ausreichend stabilen Stützelementes stabilisiert wird.

Die Aufgabe hinsichtlich des Verfahrens wird durch ein Verfahren mit den Merkmalen von Anspruch 6 gelöst.

Ein Ausführungsbeispiel der Erfindung betrifft ein Verfahren zur Herstellung einer Vorrichtung zur Aufheizung eines Abgases in einer Abgasleitung, mit einer Heizscheibe, mit einem Stützelement und mit einer Luftleitplatte, wobei in einem ersten Herstellungsschritt die Heizscheibe über die Stützmittel mit dem Stützelement verbunden wird, und in einem zweiten Herstellungsschritt der elektrische Leiter der Heizscheibe mit einem Washcoat beaufschlagt wird, wobei das mit der Heizscheibe verbundene Stützelement in einem dritten Herstellungsschritt mit der Luftleitplatte verbunden wird.

Die Verbindung der Heizscheibe mit dem Stützelement erfolgt bevorzugt durch ein Lötverfahren, wobei die Stützstifte mit dem elektrischen Leiter und dem Stützelement dauerhaft verbunden werden. Der elektrische Leiter der Heizscheibe ist somit durch die Verbindung mit dem Stützelement, welches als Rahmen wirkt, formstabil und kann so weiterverarbeitet werden, ohne es mechanisch zu deformieren.

Der Washcoat wird anschließend auf den elektrischen Leiter aufgebracht, um eine katalytisch aktive Oberfläche zu erzeugen. Die genaue Zusammensetzung des als Washcoat genutzten Materials kann bevorzugt an den jeweiligen Anwendungsfall angepasst werden. Washcoats in vielfältigen Zusammensetzungen sind im Stand der Technik hierzu bereits bekannt.

Die Luftleitplatte wird als ein der Beschichtung mit dem Washcoat nachgelagerten Herstellungsschritt mit dem Stützelement dauerhaltbar verbunden. Insbesondere werden die beiden Elemente miteinander verschweißt.

Weiterhin ist es vorteilhaft, wenn der Washcoat auf den elektrischen Leiter mittels eines Saugverfahrens oder mittels Aufblasens aufgebracht wird, wobei der Washcoat an einer der Stirnseiten der Heizscheibe platziert wird und mittels eines Saugverfahrens durch die Heizscheibe gesaugt wird oder mittels eine Aufblasverfahrens in die Heizscheibe geblasen wird.

Beschichtungsverfahren für Wabenkörper oder einen anderen elektrischen Leiter mit einem Washcoat sind im Stand der Technik bekannt. Das Prinzip dabei ist, dass entweder der Washcoat durch den Wabenkörper geblasen wird oder durch diesen gesaugt wird. Überschüssiges Material kann abgesaugt, abgeblasen oder durch mechanische Verfahren abgeschüttelt werden.

Auch ist es zweckmäßig, wenn das überschüssige Material des Washcoats, welches nicht an dem elektrischen Leiter der Heizscheibe anhaftet, in einem weiteren Herstellungsschritt mittels Absaugen oder Abblasen von der Heizscheibe entfernt wird, wobei dieser Herstellungsschritt zeitlich vor dem dritten Herstellungsschritt stattfindet.

Die Beschichtung der Heizscheibe findet somit vollständig vor der Anbindung der Luftleitplatte statt, was die Beschichtung deutlich vereinfacht und zu einer wesentlich höheren Prozessgüte beiträgt. Insbesondere wird der ungewollte Verbleib von Washcoat an der Heizscheibe verhindert. Darüber hinaus wird auch das Verblocken der im Wabenkörper ausgebildeten Strömungskanäle verhindert. Durch die hohe Beschichtungsgüte wird insgesamt eine besonders große aktive Fläche an der Heizscheibe erzeugt, wodurch die Aufheizung des vorbeiströmenden Abgases und verbessert wird. Außerdem wird die katalytisch aktive Fläche dadurch vergrößert, wodurch die chemischen Prozesse einfacher und stärker ablaufen können.

Darüber hinaus ist es vorteilhaft, wenn die Heizscheibe mit dem Stützelement mittels eines Lötverfahrens verbunden wird. Weiterhin ist es zweckmäßig, wenn das Stützelement mit der Luftleitplatte mittels eines Schweißverfahrens verbunden wird.

Auch ist es vorteilhaft, wenn die mit dem Stützelement verbundene Heizscheibe zum Zwecke des Auftragens des Waschcoats in ein Hilfsgehäuse eingelegt wird, um eine radiale Begrenzung für den Washcoat zu schaffen und ein abgeschlossenes Gehäuse für das Aufblasen oder Einsaugen des Washcoats zu erzeugen.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Explosionsdarstellung einer Vorrichtung, wobei die Luftleitplatte, das Stützelement und der die Heizscheibe bildende Wabenkörper gezeigt sind,
- Fig. 2: eine weitere Explosionsdarstellung wobei das Stützelement abweichend zur Ausführung der Figur 1 zusätzliche Ausnehmungen aufweist, und
- Fig. 3: eine alternative Ausgestaltung des Stützelementes, wobei diese im Unterschied zu den Figuren 1 und 2 topfförmig ausgebildet ist.

### Bevorzugte Ausführung der Erfindung

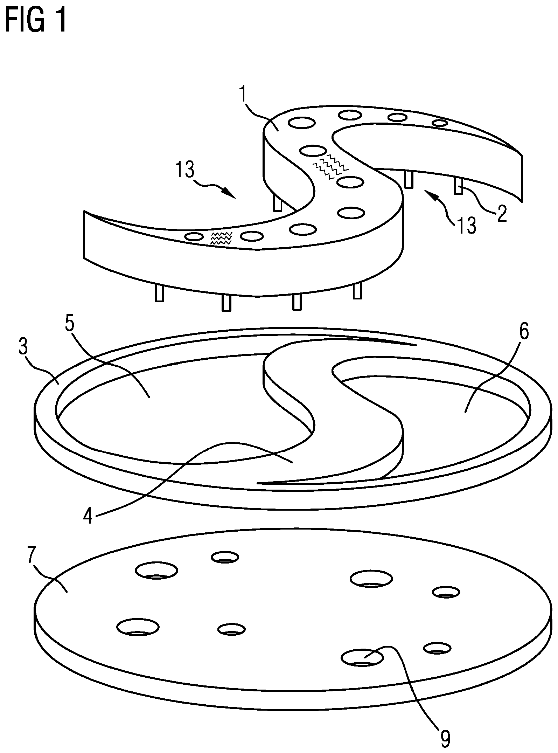

Die Figur 1 zeigt eine aus einem metallischen Wabenkörper gebildete Heizscheibe 1. Diese weist eine Mehrzahl von durchströmbaren Kanälen auf. Im Ausführungsbeispiel der Figur 1 ist die Heizscheibe 1 durch das Aufwickeln des Lagenstapels s-förmig ausgebildet. Die zwischen dem die Heizscheibe 1 bildenden elektrischen Leiter befindlichen unausgefüllten Bereiche bilden Luftspalte 13.

In der Heizscheibe 1 sind Stützmittel 2 eingesteckt, welche durch aus dem Stand der Technik bekannte Stützstifte gebildet sind. Das Stützelement 3 dient zur Aufnahme der Stützmittel 2, wodurch die Heizscheibe 1 mit dem Stützelement 3 verbunden wird. Die Heizscheibe ist mit dem Stützmittel 2 und die Stützmittel 2 sind mit dem Stützelement 3 bevorzugt verlötet.

Wir in Figur 1 zu sehen ist, weist das Stützelement 3 einen Steg 4 auf, welcher der Form der Heizscheibe 1 nachgebildet ist. Die Beiden Aussparungen 5, 6 erlauben ein großflächiges Durchströmen des Stützelementes 3.

Mit Blick auf die Verwendung der Vorrichtung in einer Heizvorrichtung, wie sie vorangegangen beschrieben wurde, würde das in Figur 1 von oben nach unten hin zum Stützelement 3 strömende Abgas nach dem Durchströmen der Heizscheibe 1 in eine radiale Richtung umgelenkt werden, wodurch das Stützelement 3 selbst zumindest bei der Rückströmung des Abgases nicht mehr wesentlich durchströmt werden würde. Primär ist daher wichtig, dass durch die Aussparungen 5, 6 die Strömung von der Luftleitplatte 7 hin zur Heizscheibe 1 möglichst wenig beeinträchtigt wird.

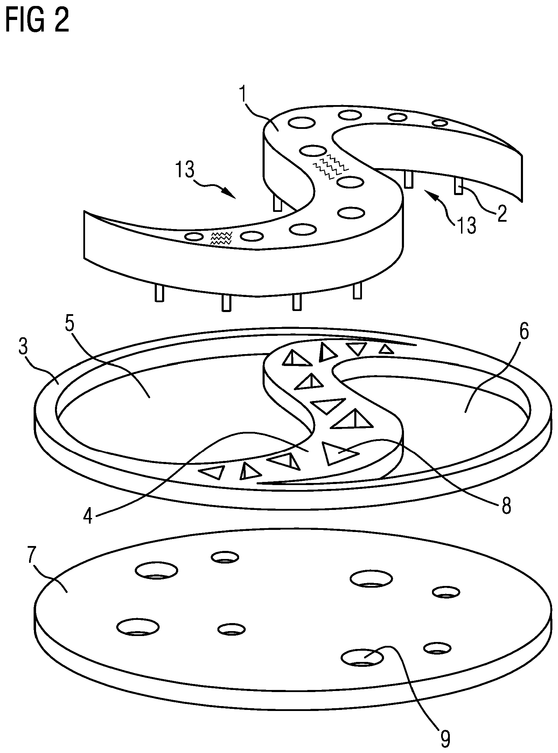

Die Figur 2 zeigt einen sehr ähnlichen Aufbau zur Figur 1, daher stimmen die Bezugszeichen für identische Merkmale auch überein. Im Unterschied zur Figur 1 weist das Stützelement 3 zusätzlich Ausnehmungen 8 auf, welche es noch besser durchströmbar machen. Je mehr Ausnehmungen 8 das Stützelement 3 aufweist, desto höher ist dessen Porosität, wodurch die Durchströmung verbessert wird. Aufeine ausreichende Stabilität des Stützelementes 3 muss jedoch unbedingt geachtet werden.

Beide Figuren 1 und 2 zeigen eine Luftleitplatte 7, welche Bohrungen 9 aufweist. Die Luftleitplatte 7 dient in der Heizvorrichtung letztlich der Leitung des Abgasstromes. Wie bereits vorangehend beschrieben, strömt da Abgas auf eine der Heizscheibe 1 abgewandten Seite der Luftleitplatte 7 und wird von dort nur durch die Bohrungen 9 hin zur Heizscheibe 1 geleitet. Die Luftleitplatte 7 ist scheibenförmig ausgebildet.

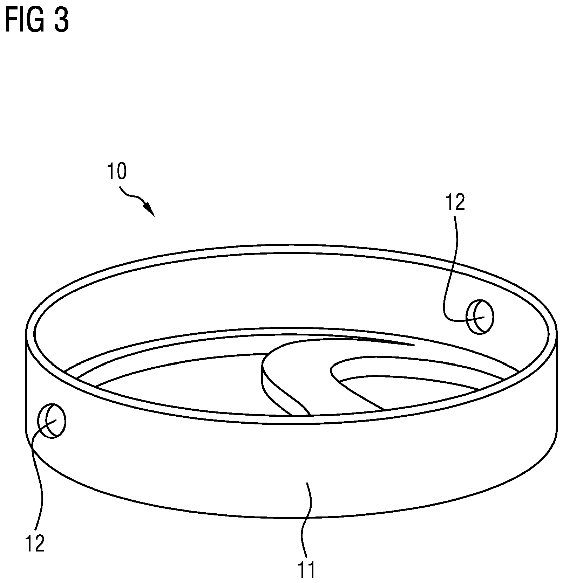

Figur 3 zeigt eine alternative Ausgestaltung eines Stützelementes 10. Das Stützelement 10 weist hier einen topfförmigen Aufbau auf, welcher durch einen sich in Richtung der nicht gezeigten Heizscheibe erstreckenden in Umfangsrichtung umlaufenden Rand 11 erzeugt ist. Der Rand 11 kann zusätzlich elektrische Durchführungen 12 aufweisen, durch welche ein elektrischer Leiter von außen hin zur Heizscheibe geführt werden kann, wodurch der die Heizscheibe bildende elektrische Leiter kontaktiert werden kann.

Zusätzlich ist der Rand 11 hilfreich für die Beschichtung der Heizscheibe mit dem Washcoat, da der Rand 11 das Ausbreiten des Washcoats in radialer Richtung begrenzt. Außerdem hilft der Rand 11 beim Erzeugen eines Überdrucks und/oder eines Unterdrucks zum Einblasen oder Aussaugen des Washcoats.

Die unterschiedlichen Merkmale der einzelnen Ausführungsbeispiele können auch untereinander kombiniert werden. Die Ausführungsbeispiele der Figuren 1 bis 3 weisen insbesondere keinen beschränkenden Charakter aufund dienen der Verdeutlichung des Erfindungsgedankens.

### Bezugszeichenliste

- 01: Heizscheibe
- 02: Stützmittel
- 03: Stützelement
- 04: Steg
- 05: Aussparung am Stützelement
- 06: Aussparung am Stützelement
- 07: Luftleitplatte
- 08: Ausnehmungen
- 09: Bohrungen
- 10: Stützelement
- 11: Rand
- 12: elektrische Durchführung
- 13: Luftspalte

## Patentansprüche

1. Vorrichtung zur Aufheizung eines in einer Abgasleitung strömenden Abgases, mit einer Heizscheibe (1), wobei die Heizscheibe (1) zumindest einen elektrischen Leiter aufweist, welcher entlang eines Leiterpfades angeordnet ist, wobei zwischen einzelnen Abschnitten des elektrischen Leiters Luftspalte (13) ausgebildet sind, wobei die Heizscheibe (1) mittels Stützmitteln (2) elektrisch isoliert mit einem scheibenartigen Stützelement (3) verbunden ist, wobei das scheibenartige Stützelement (3) zumindest einen Steg (4) aufweist, welcher eine starre Aufnahme für die Stützmittel (2) bildet, wobei das scheibenartige Stützelement (3) zumindest eine Aussparung (5, 6) aufweist, welche mit zumindest einem der Luftspalte entlang einer Hauptdurchströmungsrichtung der Vorrichtung in einer Flucht liegt und von dem Abgas durchströmbar ist **dadurch gekennzeichnet , dass** das scheibenartige Stützelement (3) auf der der Heizscheibe (1) abgewandten Seite mit einer scheibenartigen Luftleitplatte (7) verbunden ist, wobei die Luftleitplatte (7) mehrere Bohrungen (9) aufweist, welche mit der Aussparung des scheibenartigen Stützelementes (3) und/oder zumindest einem der Luftspalte (13) entlang der Hauptdurchströmungsrichtung der Vorrichtung in einer Flucht liegen und von dem Abgas durchströmbar sind.

2. Vorrichtung nach einem der vorhergehenden Ansprüche, **dadurch gekennzeichnet , dass** die Bohrungen (9) derart angeordnet sind, dass eine geradlinige Durchströmung der Vorrichtung durch die Bohrungen (9) der Luftleitplatte (7), das Stützelement (3) und die Heizscheibe (1) erfolgen kann.

3. Vorrichtung nach einem der vorhergehenden Ansprüche, **dadurch gekennzeichnet , dass** das Stützelement (10) topfförmig gestaltet ist, wobei sich von dem Stützelement (10) ein in Umfangsrichtung umlaufender Rand (11) in Richtung der Heizscheibe (1) erstreckt.

4. Vorrichtung nach einem der vorhergehenden Ansprüche, **dadurch gekennzeichnet , dass** die dem Stützelement (3, 10) zugewandte Stirnseite der Heizscheibe (1) von dem Stützelement (3, 10) durch die Stützmittel (2) auf einem Abstand größer 0 beabstandet ist.

5. Verfahren zur Herstellung einer Vorrichtung zur Aufheizung eines Abgases in einer Abgasleitung nach einem der vorherigen Ansprüche mit einer Heizscheibe (1), mit einem Stützelement (3, 10) und mit einer Luftleitplatte (7), wobei die Luftleitplatte mehrere Bohrungen (9) aufweist, **dadurch gekennzeichnet , dass** in einem ersten Herstellungsschritt die Heizscheibe (1) über die Stützmittel (2) mit dem Stützelement (3, 10) verbunden wird, und in einem zweiten Herstellungsschritt der elektrische Leiter der Heizscheibe (1) mit einem Washcoat beaufschlagt wird, wobei das mit der Heizscheibe (1) verbundene Stützelement (3, 10) in einem dritten Herstellungsschritt mit der Luftleitplatte (7) verbunden wird.

6. Verfahren zur Herstellung einer Vorrichtung nach Anspruch 5, **dadurch gekennzeichnet , dass** der Washcoat auf den elektrischen Leiter mittels eines Saugverfahrens oder mittels Aufblasen aufgebracht wird, wobei der Washcoat an einer der Stirnseiten der Heizscheibe (1) platziert wird und mittels eines Saugverfahrens durch die Heizscheibe (1) gesaugt wird oder mittels eine Aufblasverfahrens in die Heizscheibe (1) geblasen wird.

7. Verfahren zur Herstellung einer Vorrichtung nach Anspruch 6, **dadurch gekennzeichnet , dass** das überschüssige Material des Washcoats, welches nicht an dem elektrischen Leiter der Heizscheibe (1) anhaftet, in einem weiteren Herstellungsschritt mittels Absaugen oder Abblasen von der Heizscheibe (1) entfernt wird, wobei dieser Herstellungsschritt zeitlich vor dem dritten Herstellungsschritt stattfindet.

8. Verfahren zur Herstellung einer Vorrichtung nach einem der vorherigen Ansprüche 5 bis 7, **dadurch gekennzeichnet , dass** die Heizscheibe (1) mit dem Stützelement (3, 10) mittels eines Lötverfahrens verbunden wird.

9. Verfahren zur Herstellung einer Vorrichtung nach einem der Ansprüche 5 bis 8, **dadurch gekennzeichnet, dass** die mit dem Stützelement (3) verbundene Heizscheibe (1) zum Zwecke des Auftragens des Waschcoats in ein Hilfsgehäuse eingelegt wird, um eine radiale Begrenzung für den Washcoat zu schaffen und ein abgeschlossenes Gehäuse für das Aufblasen oder Einsaugen des Washcoats zu erzeugen.

10. Heizvorrichtung, umfassend eine Vorrichtung zur Aufheizung eines in einer Abgasleitung strömenden Abgases nach einem der Ansprüche 1 bis 4 sowie eine mit Kraftsoff versetzbare Prallplatte, wobei diese eingerichtet ist, dass die Abgasströmung von einem Gaseintritt durch die Bohrungen (9) der Luftleitplatte (7) entlang der Aussparungen (5, 6) des Stützelementes (3), entlang der Heizscheibe (1) hin zu der Prallplatte strömt, an der Prallplatte mit Kraftstoff versetzbar ist, und sodann das Abgasgemisch parallel zur Hauptdurchströmungsrichtung jedoch in umgekehrter Richtung durch die Heizscheibe (1), die Aussparungen (5, 6) des Stützelementes (3) und schließlich einen Gasauslass aus der Heizvorrichtung strömt.

11. Heizvorrichtung nach Anspruch 10, **dadurch gekennzeichnet, dass** die Abgasströmung entlang der Luftspalte (13) der Heizscheibe (1) hin zu der Prallplatte strömt.

12. Heizvorrichtung nach Anspruch 10 oder 11, **dadurch gekennzeichnet, dass** das Abgasgemisch in umgekehrter Richtung bevorzugt durch die von einem Wabenkörper ausgebildeten Kanäle der Heizscheibe (1) strömt.

13. Heizvorrichtung nach einem der Ansprüche 10 bis 12, **dadurch gekennzeichnet , dass** das zum Stützelement (3) strömende Abgasgemisch nach dem Durchströmen der Heizscheibe (1) in eine radiale Richtung umgelenkt wird, wodurch das Stützelement (3) selbst bei der Rückströmung des Abgasgemisches nicht mehr wesentlich durchströmt wird.

## Claims

1. Device for heating exhaust-gas flowing in an exhaust pipe, with a heating disc (1), wherein the heating disc (1) has at least one electrical conductor which is arranged along a conductor path, wherein air gaps (13) are provided between individual sections of the electrical conductor, wherein the heating disc (1) is connected to a disc-like support element (3) by means of support means (2), wherein the disc-like support element (3) has at least one web (4) which constitutes a rigid receptacle for the support means (2), wherein the disc-like support element (3) has at least one recess (5, 6) which is aligned with at least one of the air gaps along a main flow direction of the device and through which the exhaust-gas flows, **characterized in that** the disc-like support element (3) is connected to a disc-like air guide plate (7) on the side facing away from the heating disc (1), wherein the air guide plate (7) has several holes (9) which are aligned with the recess of the disc-like support element (3) and/or with at least one of the air gaps (13) along the main flow direction of the device and through which the exhaust-gas can flow.

2. Device according to one of the preceding claims, **characterized in that** the holes (9) are arranged in such a way that a straight-line flow through the device can take place through the holes (9) of the air guide plate (7), the support element (3) and the heating disc (1).

3. Device according to one of the preceding claims, **characterized in that** the support element (10) is cup-shaped, with a circumferential rim (11) extending from the support element (10) in the direction of the heating disc (1).

4. Device according to one of the preceding claims, **characterized in that** the end face of the heating disc (1) facing the support element (3, 10) is spaced apart from the support element (3, 10) by the support means (2) at a distance greater than 0.

5. Method for manufacturing a device for heating exhaust-gas in an exhaust pipe according to one of the preceding claims, with a heating disc (1), a connecting element (3, 10) and an air guide plate (7), wherein the air guide plate has a plurality of holes (9), **characterized in that**, in a first manufacturing step, the heating disc (1) is connected to the support element (3, 10) via the support means (2), and in a second manufacturing step, the electrical conductor of the heating disc (1) is provided with a washcoat, wherein the support element (3, 10) connected to the heating disc (1) is connected to the air guide plate (7) in a third manufacturing step.

6. Method for manufacturing a device according to claim 5, **characterized in that** the washcoat is applied to the electrical conductor by means of a suction process or by means of blowing, wherein the washcoat is placed on one of the end faces of the heating disc (1) and is sucked through the heating disc (1) by means of a suction process or is blown into the heating disc (1) by means of a blowing process.

7. Method for manufacturing a device according to claim 6, **characterized in that** the excess material of the washcoat which does not adhere to the electrical conductor of the heating disc (1) is removed from the heating disc (1) in a further manufacturing step by means of suction or blowing, wherein this manufacturing step takes place before the third manufacturing step.

8. Method for manufacturing a device according to one of the previous claims 5 to 7, **characterized in that** the heating disc (1) is connected to the connecting element (3, 10) by means of a brazing process.

9. Method for manufacturing a device according to one of claims 5 to 8, **characterized in that** the heating disc (1) connected to the connecting element (3) is placed in an auxiliary housing for the purpose of applying the wash coat in order to create a radial boundary for the wash coat and to produce a closed housing for blowing or sucking in the wash coat.

10. Heating device comprising a device for heating exhaust-gas flowing in an exhaust pipe according to one of the claims 1 to 4 and a baffle plate that can be provided with fuel, wherein the device is configured such that the exhaust-gas flow flows from a gas inlet through the holes (9) in the air guide plate (7) along the recesses (5, 6) of the nozzle element (3), along the heating disc (1) to the baffle plate, can be provided with fuel at the baffle plate, and then the exhaust-gas mixture flows parallel to the main flow direction but in the opposite direction through the heating disc (1), the recesses (5, 6) of the connecting element (3) and finally a gas outlet from the heating device.

11. Heating device according to claim 10, **characterized in that** the exhaust-gas flow flows along the air gaps (13) of the heating disc (1) towards the baffle plate.

12. Heating device according to claim 10 or 11, **characterized in that** the exhaust-gas mixture flows in the opposite direction preferably through the channels of the heating disc (1) formed by a honeycomb body.

13. Heating device according to one of the claims 10 to 12, **characterized in that** the exhaust-gas mixture flowing to the connecting element (3) is deflected in a radial direction after flowing through the heating disc (1), whereby the connecting element (3) is no longer substantially flowed through even during the return flow of the exhaust-gas mixture.

## Revendications

1. Dispositif de chauffage des gaz d'échappement qui s'écoulent dans une conduite d'échappement, comprenant un disque chauffant (1), le disque chauffant (1) possédant au moins un conducteur électrique, lequel est disposé le long d'un trajet conducteur, des entrefers (13) étant formés entre les portions individuelles du conducteur électrique, le disque chauffant (1) étant relié de manière électriquement isolée à un élément de support (3) en forme de disque par le biais de moyens de support (2), l'élément de support (3) en forme de disque possédant au moins une nervure (4), laquelle forme un logement rigide pour les moyens de support (2), l'élément de support (3) en forme de disque possédant au moins un évidement (5, 6), lequel se trouve en alignement avec au moins l'un des entrefers le long d'une direction d'écoulement principale du dispositif et peut être traversé par les gaz d'échappement, **caractérisé en ce que** l'élément de support (3) en forme de disque est relié, sur le côté opposé au disque chauffant (1), à une plaque de guidage d'air (7) en forme de disque, la plaque de guidage d'air (7) possédant plusieurs perçages (9), lesquels se trouvent en alignement avec l'évidement de l'élément de support (3) en forme de disque et/ou au moins l'un des entrefers (13) le long de la direction d'écoulement principale du dispositif et peuvent être traversés par les gaz d'échappement.

2. Dispositif selon l'une des revendications précédentes, **caractérisé en ce que** les perçages (9) sont disposés de telle sorte qu'un écoulement rectiligne à travers le dispositif puisse s'effectuer à travers les perçages (9) de la plaque de guidage d'air (7), l'élément de support (3) et le disque chauffant (1).

3. Dispositif selon l'une des revendications précédentes, **caractérisé en ce que** l'élément de support (10) est configuré en forme de pot, un bord (11) périphérique s'étendant dans la direction périphérique depuis l'élément de support (10) en direction du disque chauffant (1).

4. Dispositif selon l'une des revendications précédentes, **caractérisé en ce que** le côté frontal du disque chauffant (1) qui fait face à l'élément de support (3, 10) est espacé de l'élément de support (3, 10) par les moyens de support (2) d'une distance supérieure à 0.

5. Procédé de fabrication d'un dispositif de chauffage des gaz d'échappement dans une conduite d'échappement selon l'une des revendications précédentes, comprenant un disque chauffant (1), comprenant un élément de support (3, 10) et comprenant une plaque de guidage d'air (7), la plaque de guidage d'air possédant plusieurs perçages (9), **caractérisé en ce que**, dans une première étape de fabrication, le disque chauffant (1) est relié à l'élément de support (3, 10) par le biais des moyens de support (2) et, dans une deuxième étape de fabrication, le conducteur électrique du disque chauffant (1) est recouvert d'une couche lavis, l'élément de support (3, 10) relié au disque chauffant (1) étant relié à la plaque de guidage d'air (7) dans une troisième étape de fabrication.

6. Procédé de fabrication d'un dispositif selon la revendication 5, **caractérisé en ce que** la couche lavis est appliquée sur le conducteur électrique au moyen d'un procédé d'aspiration ou au moyen de soufflage, la couche lavis étant placée sur l'un des côtés frontaux du disque chauffant (1) et aspirée à travers le disque chauffant (1) au moyen d'un procédé d'aspiration ou soufflée dans le disque chauffant (1) au moyen d'un procédé de soufflage.

7. Procédé de fabrication d'un dispositif selon la revendication 6, **caractérisé en ce que** le matériau excédentaire de la couche lavis qui n'adhère pas au conducteur électrique du disque chauffant (1) est éliminé du disque chauffant (1) au cours d'une étape de fabrication supplémentaire par aspiration ou soufflage, cette étape de fabrication ayant lieu chronologiquement avant la troisième étape de fabrication.

8. Procédé de fabrication d'un dispositif selon l'une des revendications 5 à 7 précédentes, **caractérisé en ce que** le disque chauffant (1) est relié à l'élément de support (3, 10) au moyen d'un procédé de brasage.

9. Procédé de fabrication d'un dispositif selon l'une des revendications 5 à 8, **caractérisé en ce que** le disque chauffant (1) relié à l'élément de support (3) est introduit dans un boîtier auxiliaire à des fins d'application de la couche lavis, de manière à créer une délimitation radiale pour la couche lavis et à former un boîtier fermé pour le soufflage ou l'aspiration de la couche lavis.

10. Dispositif de chauffage comprenant un dispositif de chauffage des gaz d'échappement qui s'écoulent dans une conduite d'échappement selon l'une des revendications 1 à 4, ainsi qu'une plaque déflectrice déplaçable avec du carburant, celle-ci étant conçue de telle sorte que le flux de gaz d'échappement s'écoule depuis une entrée de gaz à travers les perçages (9) de la plaque de guidage d'air (7) le long des évidements (5, 6) de l'élément de support (3), le long du disque chauffant (1) vers la plaque déflectrice, peut être déplacé avec du carburant au niveau de la plaque déflectrice, puis le mélange de gaz d'échappement s'écoule ensuite hors du dispositif de chauffage, parallèlement à la direction d'écoulement principale, mais en sens inverse, à travers le disque chauffant (1), les évidements (5, 6) de l'élément de support (3) et finalement une sortie de gaz.

11. Dispositif de chauffage selon la revendication 10, **caractérisé en ce que** le flux de gaz d'échappement s'écoule le long des entrefers (13) du disque chauffant (1) vers la plaque déflectrice.

12. Dispositif de chauffage selon la revendication 10 ou 11, **caractérisé en ce que** le mélange de gaz d'échappement s'écoule en sens inverse de préférence à travers les canaux du disque chauffant (1) formés par un corps alvéolaire.

13. Dispositif de chauffage selon l'une des revendications 10 à 12, **caractérisé en ce que** le mélange de gaz d'échappement qui s'écoule vers l'élément de support (3) est dévié dans une direction radiale après avoir traversé le disque chauffant (1), moyennant quoi l'élément de support (3) n'est plus traversé de manière significative par le mélange de gaz d'échappement, même lors du reflux de celui-ci.
